# EUROPÄISCHE PATENTANMELDUNG

(11) **EP 3 586 616 A1**
(43) Veröffentlichungstag der Anmeldung: **01.01.2020**
(21) Anmeldenummer: 19182857.3
(22) Anmeldetag: 27.06.2019
(51) Int. Cl.: A01K 27/00

(54) **ROLLLEINE MIT SCHWENKBAREM AUSLAUF**

(30) Priorität: 27.06.2018 DE 102018115523
(71) Anmelder: Flexi-Bogdahn Technik GmbH & Co. KG, 22941 Bargteheide (DE)
(72) Erfinder: Bogdahn, Manfred, 22391 Hamburg (DE); Lau, Thomas, 23730 Neustadt in Holstein (DE)
(74) Vertreter: Zacco Patent- und Rechtsanwalts GmbH

(57) **Zusammenfassung**

Beschrieben wird eine Rollleinenvorrichtung (1) sowie ein Verfahren zum Auf- und Abrollen einer Leine (4) zum Führen eines Tieres. Die Rollleinenvorrichtung (1) verfügt über einen Handgriff (2) und ein Gehäuse (3) zur Aufnahme der auf- und abrollbaren Leine (4), wobei im Gehäuse (3) ein Mechanismus vorgesehen ist, der auf die zumindest teilweise abgerollte Leine (4) wenigstens zeitweise eine Rückstellkraft ausübt.

Die beschriebene technische Lösung zeichnet sich dadurch aus, dass eine Auslauföffnung (6), an dem die Leine (4) aus dem Gehäuse (3) austritt, in wenigstens zwei Positionen relativ zum Handgriff (2) überführbar ist.

## Beschreibung

Die Erfindung betrifft eine Rollleinenvorrichtung zum Führen von Tieren, die einen Handgriff und ein Gehäuse zur Aufnahme einer auf- und abrollbaren Leine aufweist. Im Gehäuse ist ein Mechanismus vorgesehen, der auf die Leine eine Rückstellkraft ausübt, sodass diese, sobald sie zumindest teilweise abgerollt ist und kein Zug auf die Leine wirkt, automatisch in das Gehäuse gezogen und hier aufgerollt wird.

Allgemein handelt es sich bei sogenannten Rollleinen um besonders ausgeführte Leinen, die in der Regel zum Ausführen von Hunden verwendet werden. Unter einer Leine werden in diesem Zusammenhang auch Gurte oder Seile verstanden. Im Vergleich zu herkömmlichen Hundeleinen zeichnen sich Rollleinen dadurch aus, dass sie eine federbelastete Spule in einem Griffgehäuse aufweisen, um die die Leine oder das Seil automatisch aufgewickelt wird. Hierdurch steht die Leine stets unter leichter Spannung und es wird sichergestellt, dass diese nicht auf dem Boden schleift und zwar unabhängig vom Abstand zwischen dem geführten Tier und dem Halter. Vorteilhaft ist hierbei insbesondere, dass sich das mit der Leine geführte Tier vergleichsweise frei bewegen kann. Im Weiteren verfügen viele der bekannten Rollleinen über eine Arretierung bzw. Bremse, mit der der Halter den Auslauf des Tieres jederzeit begrenzen, insbesondere auf eine gewünschte Länge einstellen und bei Bedarf die Entfernung zwischen ihm und dem geführten Tier verringern kann.

Eine gattungsgemäße Rollleine zum Führen von Tieren ist aus der DE 20 2006 002147 U1 bekannt. Die beschriebene Rollleine verfügt über ein Gehäuse mit einem Handgriff und eine innerhalb des Gehäuses um eine Drehachse drehbar gelagerte, federbelastete Spule, um die die Leine bei nachlassendem Zug automatisch aufgerollt wird. Des Weiteren ist eine Arretierungsvorrichtung vorgesehen, mit der die Leine bedarfsgerecht in einer zumindest teilweise abgerollten Stellung arretierbar ist. Die beschriebene technische Lösung zeichnet sich dadurch aus, dass eine Austrittsöffnung, durch die die Leine aus dem Gehäuse austritt, zumindest teilweise in Zugrichtung oder Ausdehnungsrichtung der Leine relativ zum Gehäuse beweglich angeordnet ist. Aufgrund dieser Ausführung bewegt sich die Auslauföffnung, bspw. in Form einer Buchse, in Zugrichtung der Leine, sobald die abgerollte Leine einen Endanschlag erreicht und das geführte Tier weiterhin zieht. Auf diese Weise soll die Reibung und somit der Verschleiß der Leine reduziert werden.

Problematisch bei der Nutzung von Rollleinen ist vielfach, dass aufgrund der variierenden Entfernungen zwischen Tierhalter und geführtem Tier und variierender Zugkraft die Krafteinleitung in das Gehäuse und den damit verbundenen Handgriff aus unterschiedlichen Richtungen erfolgt, was zumindest zeitweise zu einer nicht ergonomischen Handhaltung des Tierhalters führt und erhöhter Reibung im Bereich der Austrittsöffnung. Insbesondere beim Führen von Tieren, etwa Hunden, die dazu neigen, an der Leine zu ziehen, variiert die Zugrichtung zwischen einer Situation, in der das Tier "bei Fuß" geht und einer Situation, in der der Hund zieht, teilweise erheblich. Dies kann dazu führen, dass die Hand des Tierhalters am Ende des Handgriffs gequetscht wird oder dass die Unterschiede der Zugrichtung der Leine vom Halter durch eine Veränderung der Hand- und Armhaltung ausgeglichen werden müssen. Diese variierende Belastung im Bereich des Handgriffs wird von Tierhaltern beim Ausführen ihrer Tiere, insbesondere bei großen und/oder stark ziehenden Hunden, und bei längeren Strecken regelmäßig als unangenehm, unkomfortabel oder sogar als anstrengend empfunden. Vor allem für ältere Tierhalter oder Tierhalter mit Problemen in den Händen, Armen oder im Schulter-Nackenbereich stellt dieses Problem teilweise eine erhebliche Beeinträchtigung dar. Darüber hinaus führt die erhöhte Reibung im Bereich der Austrittsöffnung zu erhöhtem Verschleiß.

Ausgehend von den aus dem Stand der Technik bekannten Rollleinenvorrichtungen sowie den zuvor geschilderten Problemen liegt der Erfindung die Aufgabe zugrunde, eine Rollleinenvorrichtung derart weiterzubilden, dass auch unter unterschiedlichen Bedingungen, insbesondere bei variierenden Zugrichtungen der Leine, für den Halter ein angenehmes Halten der Rollleinenvorrichtung und somit ein Führen des Tieres möglich ist. Die anzugebende technische Lösung sollte stets einen guten, sicheren Griff für den Tierführer sicherstellen. Gleichzeitig sollten der grundsätzliche Aufbau und die Funktionalität der neuen Rollleinenvorrichtung im Wesentlichen denen der bekannten Rollleinenvorrichtung entsprechen. Ferner sollte die entsprechende technische Lösung ohne erheblichen konstruktiven Aufwand und den damit verbundenen Kosten umsetzbar sein.

Die zuvor beschriebene Aufgabe wird mit einer Rollleinenvorrichtung gemäß Anspruch 1 sowie einem Verfahren zum Auf- und Abrollen einer zum Führen von Tieren geeigneten Leine nach Anspruch 11 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft eine Rollleinenvorrichtung mit einem Handgriff und mit einem Gehäuse, in dem eine Leine zum Führen von Tieren, vorzugsweise durch eine drehbare Spule, auf- und abrollbar aufgenommen wird, wobei im Gehäuse ein Mechanismus vorgesehen ist, der auf die zumindest teilweise abgerollte Leine wenigstens zeitweise eine Rückstellkraft ausübt. Erfindungsgemäß ist die Rollleinenvorrichtung derart ausgebildet, dass eine Auslauföffnung, durch die die Leine aus dem Gehäuse austritt, in wenigstens zwei Positionen relativ zum Handgriff überführbar ist. Eine erfindungsgemäß ausgeführte Rollleinenvorrichtung verfügt somit über wenigstens ein Element, das eine Bewegung der Auslassöffnung relativ zum Handgriff initiiert oder ermöglicht. Der wesentliche Gedanke der Erfindung besteht somit darin, dass die Auslauföffnung, durch die die auf- und abrollbare Leine aus dem Gehäuse geführt wird, nicht über eine feste Position relativ zum Handgriff und/oder zum Gehäuse, das einen Handgriff aufweist verfügt, sondern relativ zum Handgriff und/oder zum Gehäuse bewegbar ist. Durch das Vorsehen geeigneter Elemente wird erreicht, dass die Auslauföffnung in wenigstens zwei unterschiedliche Positionen relativ zum Handgriff und/oder dem Gehäuse überführt werden kann.

Auf diese Weise wird der Winkel zwischen der Leine und dem Griff an den jeweiligen Betriebezustand angepasst.

Auf vorteilhafte Weise verändert sich die Position der Auslauföffnung in Abhängigkeit der Zugrichtung der Leine, insbesondere der zumindest teilweise abgerollten Leine. Die erfindungsgemäß ausgeführte Rollleinenvorrichtung mit variabler Auslauföffnung passt sich hierbei der jeweiligen Situation beim Führen eines Tieres an und ermöglicht stets einen guten, sicheren Griff für den Tierführer. In Abhängigkeit der Zugrichtung der Leine, die insbesondere vom Abstand des geführten Tiers von der Rollleinenvorrichtung und somit der Länge des abgerollten Teils der zur Verfügung stehenden Leine abhängt, befindet sich die Auslauföffnung in der Nähe oder aber in größerer Entfernung vom Handgriff. Hierbei ist von Vorteil, wenn sich die Auslauföffnung im jeweiligen Betriebszustand in einer Tangentialposition befindet in der die Leine sich tangential durch die Austrittsöffnung bis zur Spule erstreckt. Unabhängig von der Länge des abgerollten Teils der Leine und der Zugkraft nimmt der Handgriff somit stets die optimale Ausrichtung relativ zur Zugrichtung der Leine ein. Vorzugsweise verfügt die erfindungsgemäße Rollleinenvorrichtung über wenigstens ein Mittel, um die Auslauföffnung in unbelastetem Zustand der Leine, bspw. wenn das Tier "bei Fuß" geht, in einer Position zu halten, in der der Abstand zwischen der Auslauföffnung und dem Handgriff minimal ist. Vorzugsweise haben die Mittel wenigstens eine Feder, insbesondere eine Schrauben- oder Spiralfeder, mit der eine geeignete Vorspannung erzeugt wird.

Gemäß einer speziellen Ausführungsform der Erfindung ist vorgesehen, dass das Gehäuse einen offenen Auslaufbereich aufweist, innerhalb dessen die Position der Auslauföffnung veränderbar ist. Die Auslauföffnung liegt hierbei je nach der Situation beim Führen eines Tieres an unterschiedlichen Stellen des Auslaufbereiches. Um zuverlässig verhindern zu können, dass ein Tierhalter beispielsweise einen Finger im offenen Auslaufbereich einklemmt, ist vorzugsweise ein Abdeckelement vorgesehen, dass zumindest zeitweise die Bereiche des Auslaufbereiches verschließt, in denen sich die Auslauföffnung nicht befindet. Vorzugsweise handelt es sich bei diesem Abdeckelement um einen verschiebbaren Deckel, der automatisch, bevorzugt mit Hilfe einer Federkraft, über den offenen Teil des Auslaufbereiches geschoben wird, in dem sich die Auslauföffnung nicht befindet.

Eine spezielle Weiterbildung sieht vor, dass das Gehäuse gemeinsam mit der zumindest teilweise darin aufgerollten Leine relativ zum Handgriff bewegbar angeordnet ist. Gemäß dieser speziellen Ausführungsform ist somit das Gehäuse, in dem die Leine vorzugsweise um die Drehachse einer Spule auf- und abgewickelt wird, relativ zum Handgriff bewegbar. Die Auslauföffnung befindet sich hierbei im bewegbar angeordneten Gehäuse und bewegt sich bei Bedarf gemeinsam mit dem Gehäuse relativ zum Handgriff. Die Bewegung des Gehäuses mit der darin vorgesehenen Auslauföffnung erfolgt auch in diesem Fall in Abhängigkeit einer Zugrichtung der Leine. Befindet sich das geführte für Tier weiter von der Rollleinenvorrichtung entfernt und zieht an der Leine, so bewegt sich das Gehäuse mit der darin vorgesehenen Auslauföffnung derart, dass ein Abstand zwischen der Auslauföffnung und dem Handgriff größer ist, als wenn sich das Tier in der Nähe der Rollleinenvorrichtung befindet, insbesondere wenn es "bei Fuß" geht.

In einer alternativen Ausführungsform der Erfindung ist vorgesehen, dass am Gehäuse ein Hebelelement befestigt ist, das wenigstens bereichsweise die Leine berührt und durch dessen Bewegung relativ zum Gehäuse die Auslauföffnung verschoben, insbesondere verschwenkt wird. Bevorzugt verfügt das Hebelelement über einen Umlenkbereich, über den die Leine geführt wird und der sich bei einer Bewegung des Hebelelementes derart bewegt, dass die Auslauföffnung gemeinsam mit der Leine bedarfsgerecht bzw. situationsbedingt entweder in Richtung des Handgriffs oder in umgekehrter Richtung verschoben, insbesondere verschwenkt wird.

Vorzugsweise ist das Hebelelement um eine Achse schwenkbar, die mit der Drehachse der Spule, um die die Leine zumindest teilweise aufgewickelt ist, zusammenfällt. Das Hebelelement wird somit zur Verlagerung der Auslauföffnung relativ zum Handgriff und/oder dem Gehäuse der Rollleinenvorrichtung um die Schwenkachse geschwenkt.

Gemäß einer weiteren Ausgestaltung der Erfindung ist vorgesehen, dass der Mechanismus zur Aufbringung einer Rückstellkraft auf die Leine über wenigstens ein Federelement verfügt. Bevorzugt ist das Federelement im Inneren des Gehäuses angeordnet und wirkt auf eine Spule, um die die Leine aufgewickelt wird. Die Spule ist hierbei um eine Drehachse drehbar gelagert und wird derart mit einer Federkraft beaufschlagt, dass auf die zumindest teilweise abgerollte Leine eine Rückstellkraft ausgeübt wird, sodass die Leine bei nachlassender Zugkraft um die Spule aufgewickelt wird. Die Federkraft ist derart bemessen, dass die Leine zuverlässig gespannt und bei nachlassender Zugkraft aufgerollt wird, ohne dass das mit der Leine geführte Tier hierdurch beeinträchtigt wird. Vorzugsweise handelt es sich bei dem Federelement um eine Schrauben- oder Spiralfeder.

Des Weiteren ist auf vorteilhafte Weise vorgesehen, dass eine erfindungsgemäß ausgeführte Rollleinenvorrichtung über eine Arretierung verfügt, durch die die Leine in einer zumindest teilweise abgerollten Stellung fixierbar bzw. bremsbar oder arretierbar ist. Ein derartiger Arretierungsmechanismus stellt sicher, dass der Auslauf des geführten Tieres bei Bedarf begrenzt werden kann und gegebenenfalls der Abstand zwischen dem Halter und dem geführten Titel bedarfsgerecht verringert werden kann. Neben einer Vorrichtung betrifft die Erfindung auch ein Verfahren zum Auf- und Abrollen einer Leine zum Führen von Tieren. Bei dem Verfahren wird die Leine um eine mit einem Handgriff zumindest mittelbar verbundene Spule wenigstens zeitweise auf oder abgewickelt. Das Verfahren ist erfindungsgemäß derart ausgebildet, dass ein Winkel zwischen der Zugrichtung der Leine und einer in Längsrichtung des Handgriffs verlaufenden Mittenachse des Handgriffs zumindest zeitweise verändert wird. In Abhängigkeit des Abstandes des Tieres vom Tierhalter und der damit verbundenen Zugrichtung wird der zuvor beschriebenen Winkel verändert.

Befindet sich das Tier in unmittelbarer Nähe des Halters, geht es beispielsweise "bei Fuß", ist der Winkel zwischen der Mittenlinie des Handgriffs und der Zugrichtung der Leine vergleichsweise klein oder wird sogar minimal.

Entfernt sich das Tier nunmehr von Tierhalter, sodass sich die Leine unter Zug abrollt, schwenkt die Auslauföffnung am Gehäuse, gemäß einer besonderen Ausführungsform gemeinsam mit dem Gehäuse, derart nach unten, so dass sich der Winkel zwischen der Mittenachse des Handgriffs und der Zugrichtung vergrößert.

Unabhängig, ob die erfindungsgemäße Vorrichtung oder das Verfahren realisiert wird, besteht der wesentliche Gedanke der Erfindung darin, dass sich die Auslauföffnung, sofern der Hund bei Fuß geht und nicht zieht, in der oberen Position befindet, der Abstand zwischen Auslauföffnung und Handgriff minimal wird und so ein reibungsarmer Ein- und Auslauf der Leine tangential zur Spule, um die sie aufgewickelt wird, gewährleistet ist. Sofern das Tier an der Leine zieht, schwenkt die Auslauföffnung nach unten und der Abstand zwischen Auslauföffnung und Handgriff bzw. der Winkel zwischen der Zugrichtung der Leine und der Mittenachse des Handgriffs vergrößern sich.

Im Folgenden wird die Erfindung ohne Beschränkung des allgemeinen Erfindungsgedankens anhand von speziellen Ausführungsbeispiele unter Bezugnahme auf Figuren näher erläutert. Dabei zeigen:
- Fig. 1:: Rollleinenvorrichtung mit einem schwenkbar zum Handgriff angeordneten Gehäuseteil während ein Tier "bei Fuß" geht;
- Fig. 2:: Rollleinenvorrichtung mit einem relativ zum Handgriff schwenkbar ausgeführten Gehäuseteil, während ein Tier an der Leine zieht;
- Fig. 3:: Rollleinenvorrichtung mit einem Hebelelement zur Bewegung der Auslauföffnung während ein Tier "bei Fuß" geht sowie
- Fig. 4:: Rollleinenvorrichtung mit einem Hebelelement zur Bewegung der Auslauföffnung während ein Tier an der Leine zieht.

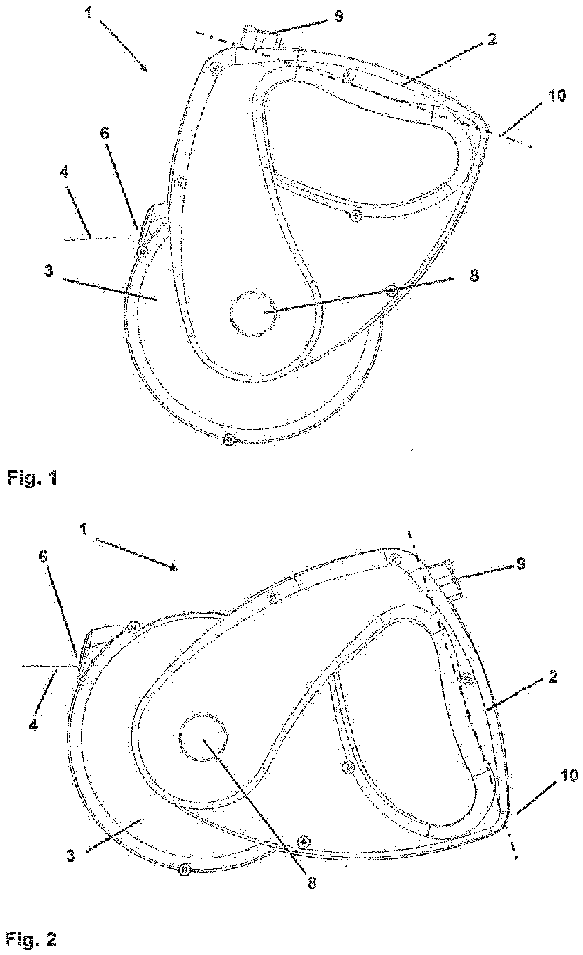

Fig. 1 zeigt eine erfindungsgemäß ausgeführte Rollleinenvorrichtung 1 mit einem Handgriff 2 und einem Gehäuse 3, in dem die Leine 4 beim Führen eines Tieres, insbesondere eines Hundes, bedarfsgerecht um eine drehbar gelagerte Spule auf- und abgerollt wird. Die Spule steht hierbei mit einem Mechanismus in Wirkverbindung, der auf die zumindest teilweise abgerollte Leine 4 eine Rückstellkraft ausübt, so dass diese bei Nachlassen des Zuges an der Leine 4 automatisch in das Gehäuse 3 gezogen und aufgerollt wird. Der Mechanismus verfügt hierfür über eine nicht in der Figur dargestellte Feder mit geeigneter Federkraft, die die jeweils benötigte Rückstellkraft auf die Leine 4 bewirkt. Die Rückstellkraft ist derart bemessen, dass die zumindest teilweise abgerollte Leine 4 stets gespannt ist sowie bei nachlassendem Zug in das Gehäuse 3 und um die Spule aufgerollt wird, ohne dass das mit der Leine geführte Tier hierdurch beeinträchtigt wird.

Des Weiteren verfügt die in Fig. 1 dargestellte Rollleinenvorrichtung 1 über einen Arretierungsmechanismus, der bei Bedarf vom Halter über einen Druckknopf 9 aktiviert wird und die Leine 4 in der zu diesem Zeitpunkt befindlichen Position fixiert. Das geführte Tier kann so in einem konstanten Abstand zum Tierhalter geführt werden oder bei Bedarf der Abstand zwischen Tier und Tierhalter verringert werden.

Gemäß der in Fig. 1 dargestellten Ausführungsform ist das Gehäuse 3, in dem die Leine 4 um eine drehbar gelagerte Spule auf- und abgerollt wird, relativ zum Handgriff 2 schwenkbar ausgeführt. Dies bedeutet, dass der Handgriff 2 und das schwenkbare Gehäuse 3 während des Schwenkens eine Relativbewegung zueinander ausführen. Das Gehäuse 3 schwenkt in dem gezeigten Ausführungsbeispiel relativ zum Handgriff 2 um eine Schwenkachse 8, die mit der Drehachse der Spule, um die die Leine 4 zumindest teilweise aufgewickelt ist, zusammenfällt. Da im schwenkbaren Gehäuse 3 eine Auslauföffnung 6 für die Leine 4 vorgesehen ist, wird diese Auslauföffnung 6 während einer Schwenkbewegung ebenfalls relativ zum Handgriff 2 bewegt. Aufgrund dieser technischen Lösung kann ein Abstand zwischen der im Gehäuse 3 vorgesehenen Auslauföffnung 6 und dem Handgriff 2 variiert werden. Der Abstand wird hierbei an die jeweilige Situation beim Führen des Tieres angepasst.

In Fig. 1 ist die Rollleinenvorrichtung 1 in einer Situation dargestellt, in der das geführte Tier, insbesondere ein Hund, bei Fuß geht und nicht zieht. Die Auslauföffnung 6 befindet sich in der oberen Position, sodass der Abstand zwischen der Auslauföffnung 6 und dem Handgriff 2 minimal ist und so ein reibungsarmer Ein- und Auslauf der Leine 4 tangential zur Spule, auf die die Leine zumindest teilweise im Inneren des Gehäuses 3 aufgewickelt ist, realisiert wird. Die Leine 4 läuft in dieser Situation neben dem Tierhalten von der Auslauföffnung 6 schräg nach unten zum geführten Tier, insbesondere geführten Hund. Ein reibungsarmer Leinenlauf wird hier erreicht, wenn sich die Auslauföffnung 6 am Gehäuse 3 oben in Griffnähe befindet. Würde sich in dieser Situation die Auslauföffnung 6 weiter unten, also in größerer Entfernung zum Handgriff 2 befinden, würde durch ein Abknicken der Leine 4 im Bereich der Auslauföffnung 6 ein freier Auslauf der Leine 4 stark behindert und die Handhabung wäre für den Tierhalter nicht so angenehm, wie mit der in Figur 1 gezeigten Stellung des Handgriffs 2 und des Gehäuses 3 mit der Auslauföffnung 6.

Im Bereich des Umfangs der im drehbar gelagerten Gehäuse 3 vorgesehenen Auslauföffnung 6 berührt die Leine 4 das Gehäuse 3 bzw. die Auslauföffnung 6 und wird so geführt. Aufgrund einer geeigneten, mit Hilfe einer Feder, insbesondere einer Schrauben- oder Spiralfeder, erzeugten Vorspannung wird das drehbare Gehäuse 3 gegenüber dem Handgriff 2 derart vorgespannt, dass sich die Auslauföffnung 6 in der in Fig. 1 dargestellten Situation, in der das Tier "bei Fuß läuft ohne zu ziehen, am oberen Endanschlag befindet, sodass der Abstand zwischen der Auslauföffnung 6 und dem Handgriff 2 bzw. ein zwischen Zugrichtung der Leine und einer in Längsrichtung des Handgriffs verlaufenden Mittenachse 10 eingeschlossener Winkel minimal ist.

In Fig. 2 ist eine Rollleinenvorrichtung 1 mit einem relativ zum Handgriff 2 drehbar ausgeführten Gehäuseteil 3 dargestellt, wie es auch in Fig. 1 gezeigt ist. Fig. 2 zeigt die Rollleinenvorrichtung 1 allerdings in einer Situation, in der das Tier, insbesondere ein Hund, an der Leine 4 zieht und/oder die Leine 4, der Gurt oder das Seil bis zu einem Endanschlag voll ausgezogen ist. Die Leine 4 befindet sich somit vor dem Hundeführer, sodass der Zug von vorne kommt und der Arm des Tierhalters weit nach vorn gerichtet ist. In dieser Situation ist es von Vorteil für den Kraftverlauf, dass sich die Auslauföffnung 6 weiter vom Handgriff 2 weg befindet, was durch Schwenken des Gehäuses 3 mit der Auslauföffnung 6 vom Handgriff 2 weg erreicht wird. In Fig. 2 befindet sich die Auslauföffnung 6 in einer Position, in der sie deutlich weiter vom Handgriff 2 entfernt ist, als dies bei der in Fig. 1 dargestellten Situation der Fall ist. Würde sich die Auslauföffnung 6 in dieser Situation näher am Handgriff 2 befinden, wäre dies nachteilig im Hinblick auf die Ergonomie, da die Hand des Tierführers abknicken und eventuell in die Ecke der Grifföffnung rutschen würde. Ferner hätte dies wiederum den Nachteil, dass die Reibung der Leine im Bereich der Auslauföffnung 6 durch ein Abknicken der Leine 4 besonders groß wäre. Diese Nachteile werden mit der erfindungsgemäß ausgeführten Rollleinenvorrichtung 1 vermieden.

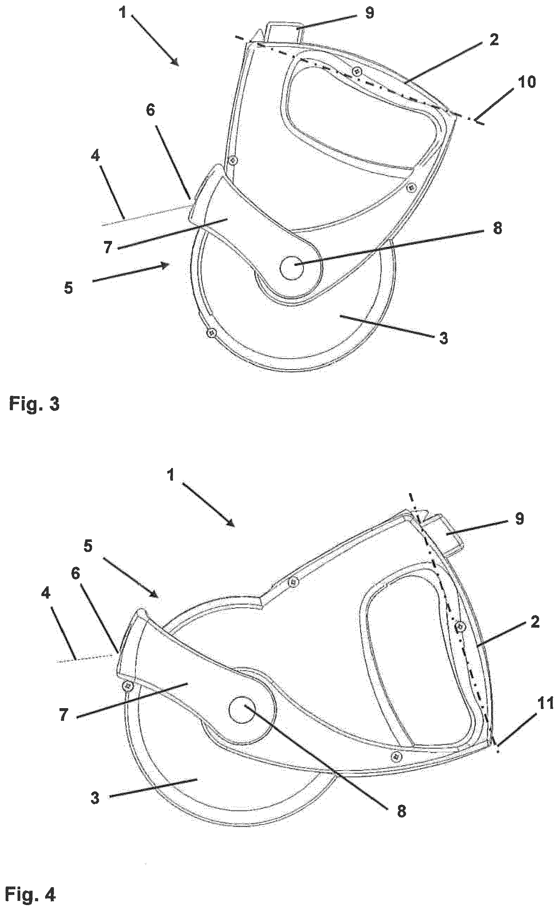

Fig. 3 zeigt eine Ausführungsform der Erfindung, bei der die erfindungsgemäß ausgeführte Rollleinenvorrichtung 1 über ein Hebelelement 7 verfügt, das in Form eines Trägers die Leine 4 führt und um eine Schwenkachse 8 schwenkbar am Gehäuse 3 angeordnet ist. Die Auslauföffnung 6 befindet sich im Hebelelement 7 und wird bei einer Schwenkbewegung des Hebelelements 7 gemeinsam mit diesem relativ zum Handgriff 2 bewegt. Hierbei wird die Leine 4 innerhalb eines Auslaufbereichs 5 des Gehäuses bewegt, der während der Schwenkbewegung zumindest teilweise von dem Hebelelement 7 überstrichen wird.

In Fig. 3 ist wiederum eine Situation dargestellt, in der das geführte Tier "bei Fuß" geht, sich somit in unmittelbarer Nähe neben dem Tierführer befindet. Das Hebelelement 7 befindet sich in dieser Situation gemeinsam mit der darin angeordneten Auslauföffnung 6 in einer zum Handgriff 2 hin geschwenkten Stellung, so dass der Abstand zwischen der Auslauföffnung 6 und dem Handgriff 2 bzw. der Grifföffnung minimal ist.

Das Hebelelement 7 in Form eines Trägers berührt im Bereich der Auslauföffnung 6 die Leine 4 und führt diese. Aufgrund einer geeigneten, mit Hilfe einer Feder, insbesondere einer Schrauben- oder Spiralfeder, erzeugten Vorspannung wird das Halteelement 7 derart vorgespannt, dass sich die Auslauföffnung 6 in der in Fig. 3 dargestellten Situation, in der das Tier "bei Fuß läuft ohne zu ziehen, am oberen Endanschlag befindet, sodass der Abstand zwischen der Auslauföffnung 6 und dem Handgriff 2 bzw. ein zwischen Zugrichtung der Leine 4 und einer in Längsrichtung des Handgriffs verlaufenden Mittenachse 10 eingeschlossener Winkel minimal ist.

Das Hebelelement 7 gemäß Fig. 3 ist um die Drehachse der Spule, um die die Leine 4 auf- und abgewickelt wird, schwenkbar angeordnet. Die Drehachse der Spule und die Schwenkachse 8 des Hebelelements 7 fallen somit zusammen. Auf diese Weise wird die Belastung der Drehlager auf geeignete Weise minimiert.

Ferner verfügt auch die in Fig. 3 dargestellte Rollleinenvorrichtung 1 über eine durch Betätigung eines Druckknopfs 9 zu aktivierende Arretierung bzw. Bremse für die Leine 4. Hierbei erfolgt die Einleitung einer Bremskraft in die Leine 4 nicht ruckartig, sondern vergleichsweise weich, um insgesamt die Krafteinleitung in die Rollleinenvorrichtung 1 und damit den Bedienungskomfort für den Tierführer zu optimieren.

Fig. 4 zeigt eine Rollleinenvorrichtung 1, die über die im Zusammenhang mit Fig. 3 bereits beschriebenen technischen Merkmale verfügt. Allerdings stellt Fig. 4 die Rollleinenvorrichtung 1 wiederum in einer Situation dar, in der das geführte Tier an der Leine 4 zieht und sich weiter vom Tierhalter entfernt befindet, als in der in Fig. 3 gezeigten Situation. Das am Gehäuse 3 schwenkbar angeordnete Hebelelement 7 mit der Auslauföffnung 6 befindet sich hierbei in einer nach unten geschwenkten Position, so dass der Abstand zwischen der Auslauföffnung 6 und dem Handgriff 2 im Vergleich zu der in Fig. 3 gezeigten Situation, deutlich größer ist. Aufgrund des durch das geführte Tier verursachten Zugs wurde das Hebelelement 7 mit der Auslauföffnung 6 um die Schwenkachse 7 in die untere Position geschwenkt, so dass ein geradliniger Kraftverlauf realisiert ist, bei dem sowohl die Hand des Tierführers als auch die Leine 4 im Bereich der Auslauföffnung 6 nur minimal abknickt, idealerweise weitgehend tangential zur Spule verläuft. Das Gehäuse 3 mit dem Handgriff 2 liegt weiterhin sicher in der Hand des Tierführers und bietet einen guten Gegenhalt, ohne dass die Hand verdreht oder gegen den unteren Bereich der Grifföffnung gedrückt wird.

### Bezuaszeichenliste

- 1: Rollleinenvorrichtung
- 2: Handgriff
- 3: Gehäuse
- 4: Leine
- 5: Auslaufbereich
- 6: Auslauföffnung
- 7: Hebelelement
- 8: Schwenkachse
- 9: Druckknopf der Arretierung
- 10: Mittenachse in Längsrichtung des Handgriffs

## Patentansprüche

1. Rollleinenvorrichtung (1) mit einem Handgriff (2) und mit einem Gehäuse (3) zur Aufnahme einer auf- und abrollbaren Leine (4) zum Führen von Tieren, wobei im Gehäuse (3) ein Mechanismus vorgesehen ist, der auf die zumindest teilweise abgerollte Leine (4) wenigstens zeitweise eine Rückstellkraft ausübt,
**dadurch gekennzeichnet, dass** Mittel vorgesehen sind, um eine Auslauföffnung (6), durch die die Leine (4) aus dem Gehäuse (3) austritt, in wenigstens zwei Positionen relativ zum Handgriff (2) zu überführen.

2. Rollleinenvorrichtung (1) nach Anspruch 1,
**dadurch gekennzeichnet, dass** das Gehäuse (3) einen offenen Auslaufbereich (5) aufweist, in dem die Position der Auslauföffnung (6) veränderbar ist.

3. Rollleinenvorrichtung (1) nach Anspruch 2,
**dadurch gekennzeichnet, dass** wenigstens ein Abdeckelement vorgesehen ist, mit dem der offene Auslaufbereich (5) des Gehäuses (3) zumindest bereichsweise abgedeckt wird.

4. Rollleinenvorrichtung (1) nach einem der Ansprüche 1 bis 3,
**dadurch gekennzeichnet, dass** das Gehäuse (3) mit der zumindest teilweise aufgerollten Leine (4) relativ zum Handgriff (2) bewegbar angeordnet ist.

5. Rollleinenvorrichtung (1) nach einem der Ansprüche 1 bis 3,
**dadurch gekennzeichnet, dass** am Gehäuse (3) ein Hebelelement (7) befestigt ist, das wenigstens bereichsweise die Leine (4) berührt und durch dessen Bewegung relativ zum Gehäuse (3) die Auslauföffnung (6) verschoben wird.

6. Rollleinenvorrichtung (1) nach Anspruch 5,
**dadurch gekennzeichnet, dass** das Hebelelement (7) um eine Achse (8) schwenkbar ist, um die vorzugsweise die Leine (4) aufgerollt wird.

7. Rollleinenvorrichtung (1) nach einem der Ansprüche 1 bis 6,
**dadurch gekennzeichnet, dass** der Mechanismus zum Ausüben einer Rückstellkraft auf die Leine (4) über wenigstens ein Federelement verfügt.

8. Rollleinenvorrichtung (1) nach einem der Ansprüche 1 bis 7,
**dadurch gekennzeichnet, dass** eine Arretierung vorgesehen ist, durch die die Leine (4) in einer zumindest teilweise abgerollten Stellung fixiert wird.

9. Rollleinenvorrichtung (1) nach einem der Ansprüche 1 bis 8,
**dadurch gekennzeichnet, dass** Mittel vorgesehen sind, um die Auslassöffnung (6) in unbelastetem Zustand der Leine (4) in einer Position zu halten, in der ein Abstand zum Handgriff (2) minimal ist.

10. Rollleinenvorrichtung (1) nach Anspruch 9,
**dadurch gekennzeichnet, dass** die Mittel wenigstens ein Federelement aufweisen.

11. Verfahren zum Auf- und Abrollen einer Leine (4) zum Führen von Tieren, bei dem die Leine (4) um eine mit einem Handgriff (2) verbundene Trommel wenigstens zeitweise auf- oder abgewickelt wird,
**dadurch gekennzeichnet, dass** ein Winkel zwischen der Zugrichtung der Leine (4) und einer in Längsrichtung des Handgriffs (2) verlaufenden Mittenachse des Handgriffs zumindest zeitweise verändert wird.
